# EUROPEAN PATENT SPECIFICATION

(11) **EP 0 531 144 B1**
(45) Date of publication and mention of the grant of the patent: **31.05.2000**
(21) Application number: 92308023.8
(22) Date of filing: 04.09.1992
(51) Int. Cl.: H04B 7/26, H04Q 7/32, H04M 1/72

(54) **Radio telephone apparatus having call limiting function**
Funktelefongerät mit Anrufbegrenzungsfähigkeit
Appareil de radio-téléphonie avec fonction de limitation d'appels

(30) Priority: 06.09.1991 JP 25447891
(43) Date of publication of application: 10.03.1993
(73) Proprietor: NEC CORPORATION, Tokyo (JP)
(72) Inventor: Norimatsu, Noriko, c/o NEC Corporation, Minato-ku, Tokyo (JP)
(74) Representative: Moir, Michael Christopher

(56) References cited:
- GB-A- 2 234 883
- PATENT ABSTRACTS OF JAPAN vol. 013, no. 200 (P-869)12 May 1989

## Description

The present invention relates to a portable radio telephone apparatus having a call limiting function.

Nowadays, firms and companies renting out portable radio telephone sets have started their activities. Since the use can conveniently rent such a telephone set at a low price, need for the rental telephone sets has been increasing year after year.

In such a rental telephone apparatus, to restrict or limit usage thereof, it has been common to add a call limiting function thereto so that when a preset condition related to the call is satisfied, the call initiation is restricted accordingly. For example, the call can be initiated only to particular telephone numbers or the call is inhibited to any telephone number.

Heretofore, as the call limiting conditions with respect to time, there have been adopted, for example, the total call time and call frequency to achieve the call limitation as follows.

In the rental telephone set, the upper limit of the period of time is set for the total period of time used for the calls. Namely, when the total period of time of the actual calls reaches the upper-limit value, the call is limited.

On the other hand, the upper limit of the frequency of number of calls is established such that when the total number of actual calls becomes to be equal to the upper limit, the call is limited.

Conventionally, the telephone sets have been rented out under the call conditions above. However, for users who rent the telephone apparatuses for a certain period of time in a successive manner, the call limiting criteria above have been inappropriate in many cases.

Namely, the limiting values of the call time and frequency cannot be easily set in advance according to the period of telephone usage, which consequently leads to a problem for the users. There may possibly occur a case where before the termination of a contracted period of telephone usage, the call may possibly be inhibited due to the limitation of the call time or frequency. On the other hand, there exists a problem for the company renting out the telephone sets, namely, when the call time and frequency each have a margin, the rented telephone may possibly be operated for a call after the contracted period of telephone usage is expired.

GB 2,239,883 describes terminal equipment of a vehicle radio telephone system which is automatically locked when a predetermined period of time expires after the end of a communication.

It is therefore an object of the present invention to provide a portable telephone apparatus having a call limiting function capable of limiting a call on the basis of a rental period of the telephone apparatus, namely, an elapsed period of time or a current time for the rented telephone set.

Accordingly, the present invention provides a radio telephone apparatus having a call-limiting function, the apparatus comprising a main power supply, a master processor, RAM and a timer, characterised by further comprising a slave processor with an auxiliary power supply independent of said main power supply for supplying power to the slave processor, RAM and timer, and means for keying a start command containing a count, the slave processor being arranged to set the keyed-in count into the RAM, to decrement the contents of the RAM on each interrupt generated by the timer, and to send a call limitation signal to the master processor when the contents of the RAM reach zero and power is supplied to the master processor, wherein the RAM is arranged to contain a list of callable numbers, and on receipt of the call limitation signal the master processor allows call initiation only to a callable number.

The objects and features of the present invention will become more apparent from the consideration of the following detailed description taken in conjunction with the accompanying drawings in which:
Fig. 1 is a block diagram schematically showing a portable radio telephone set having a call limiting function in an embodiment according to the present invention;
Fig. 2 is a block diagram showing the configuration of the primary portion of the telephone set of Fig. 1;
Fig. 3 is a block diagram schematically showing a portable radio telephone set having a call limiting function in an alternative embodiment according to the present invention;
Fig. 4 is a flowchart showing an example of processing at a call initiation from a master central processing unit (CPU) block of Fig. 3;
Fig. 5 is a flowchart showing an example of processing achieved by the CPU block of Fig. 3;
Fig. 6 is a flowchart showing an example of processing conducted by a slave CPU block of Fig. 3;
Fig. 7 is a flowchart showing another example of processing achieved by the CPU block of Fig. 3; and
Fig. 8 is a flowchart showing another example of processing conducted by the slave CPU block of Fig. 3.

### DESCRIPTION OF THE PREFERRED EMBODIMENT

Referring now to the drawings, a description will be given of embodiments of the radio telephone set having a call limiting function in accordance with the present invention.

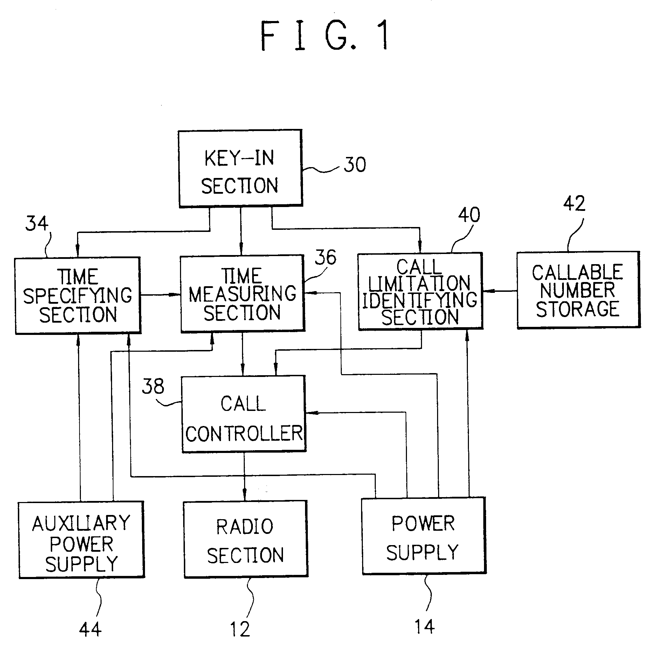

Fig. 1 shows an embodiment of the portable radio telephone set having a call limiting function in accordance with the present invention. The apparatus includes a key-in section 30 for inputting therefrom a request for call initiation, a count time associated with the call limiting time, and an instruction for count initiation. The count time equivalent to the call limiting time supplied from the key-in section 30 is set and stored in a time specifying section 34. A time measuring section 36 starts, on receiving the instruction for the count initiation from the key-in section 30, the time elapsed thereafter to check the measured time against the period of time stored in the time specifying section 34, When the lapse of the period of time stored in the section 34 is detected by the time measuring section 36, a call controller 38 restricts the call initiation thereafter. If this is not the case, the call controller 38 sends the call request via a radio section 12 to a base station, not shown.

A call limitation identifying section 40 checks the call request inputted from the key-in section 30 by referencing a call number stored in a callable number storage 42 to limit the call initiation accordingly. In this section 40, although not shown, the frequency of calls may be counted so as to restrict the call when the total number of the calls reaches the value of frequency stored in the storage 42.

A main power supply 14 delivers power to the respective sections of the apparatus. An auxiliary power supply 44 is operative, when the power supply 14 is off, for supplying power to the time specifying section 34, the time measuring section 36, and the call controller 38.

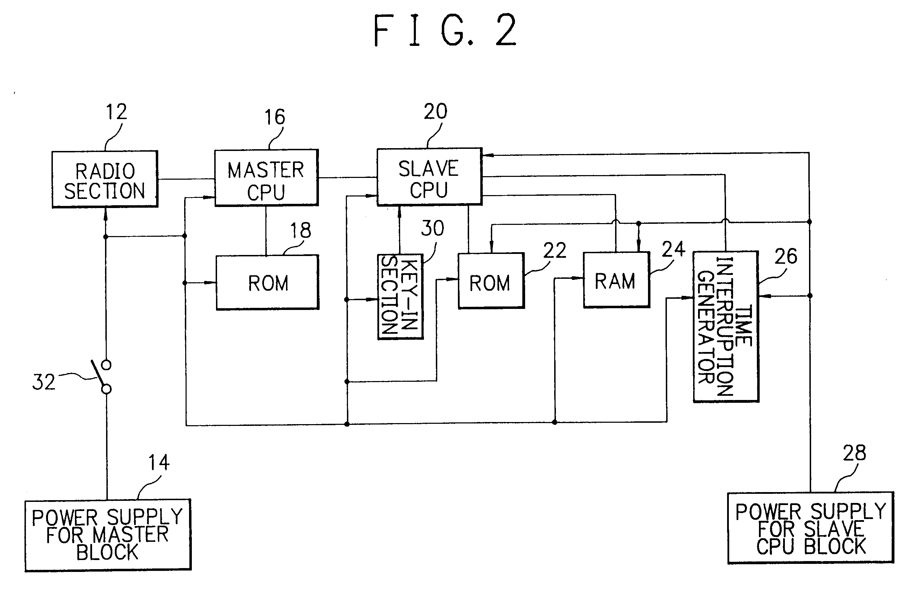

Fig. 2 specifically shows the constitution of the primary portion of the apparatus of Fig. 1. The configuration includes a radio section 12, a main power supply 14, a master CPU 16, a read-only memory (ROM) 18 loaded with a control procedure of the master CPU 16, a slave CPU 20, an ROM 22 loaded with a control procedure of the slave CPU 20, a random access memory (RAM) 24 for the slave CPU 20, a time interruption generator 26 for issuing a timer interruption to the slave CPU 20 at a fixed interval of time, a power supply for slave CPU block 28, a key-in section 30, and a power switch 32.

In Fig. 2, the RAM 24, the slave CPU 20 and time interruption generator 26, the master CPU 16 and slave CPU 20, the master CPU 16, the RAM 24, and the power supply for slave CPU block 28 respectively correspond to the time specifying section 34, the time measuring section 36, the call controller 38, the call limitation identifier 40, the callable number storage 42, and the auxiliary power supply 44 of Fig. 1.

In the constitution of Fig. 2, the power supply 14 feeds power to the respective components in association with the operation of the power switch 32. When the power switch 32 is turned on, power is appropriately supplied to the radio section 12, the master CPU 16, the ROM 18, the slave CPU 20, the ROM 22, the RAM 24, the time interruption generator 26, and key-in section 30. When the switch 32 is turned off, the power supply is interrupted.

On the other hand, the power supply for slave CPU block 28 continuously supplies power, even when the power switch 32 is off, to the slave CPU 20, the ROM 22, the RAM 24, and the time interruption generator 26 so as to set these sections to the operable state.

The master CPU 16 conducts the primarily control operation for the basic functions of the wireless telephone set by executing the control procedure stored in the ROM 18. The master CPU 16 also executes processing of the call limitation.

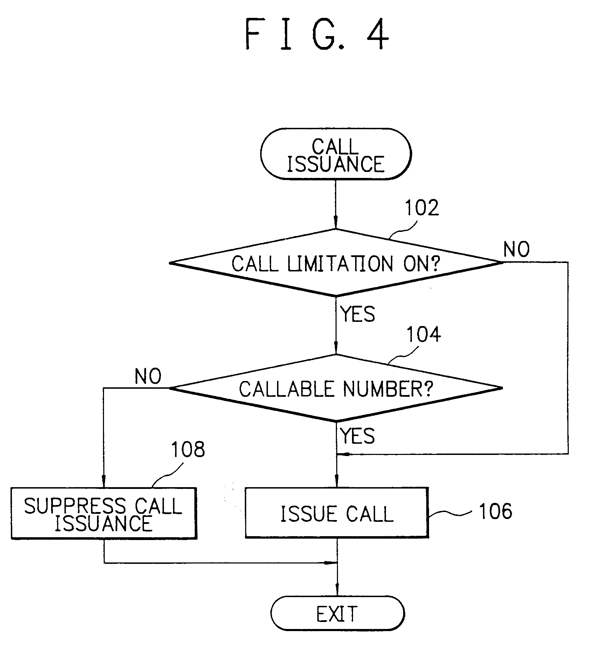

Fig. 4 is a flowchart of an example of processing accomplished to initiate a call by the master CPU 3. However, there is missing in the flowchart the call limitation according to the specified period of time or the specified point of time, which is a feature of the present invention.

When a call operation is conducted from the key-in section 30, data related thereto is inputted via the slave CPU 20 to the master CPU 16. The master CPU 16 checks to determine whether or not the the call limitation is in the on state (step 102), i.e., in the effective state as shown in Fig. 4. This is achieved, for example, by confirming via the slave CPU 20 whether or not the call limitation flag in the RAM 24 is on.

When the call limitation is in the off state, the call initiation is allowed. Consequently, the master CPU 16 proceeds to a step 106 to transmit the pertinent call request via the radio section 12 to a base station, not shown.

On the other hand, when the call limitation is in the on state denoting that the call is restricted, a destination telephone number contained in the call request is checked against the callable numbers beforehand registered to the system (step 104). The callable number check can be carried out, for example, by referencing via the slave CPU 20 the callable telephone numbers beforehand stored in the RAM 24.

If the telephone number is found in the stored callable telephone numbers, the master CPU 16 proceeds to the step 106 to issue the call containing the telephone number. Otherwise, control is passed to a step 108 to terminate the processing without issuing the call.

The call initiation processing above will be described by referring to Fig. 1. When a call request is inputted from the key-in section 30, the call controller 38 checks to decide whether or not the call limitation is in the on state. If the call limitation is in the off state, the call request is transmitted via the radio section 12. Otherwise, the call limitation identifying section 40 judges to determined whether or not the telephone number of the communicating partner has already been registered to the callable number storage 42. Depending on the decision thus achieved, the call is initiated or the call origination is suppressed, thereby completing the processing.

Subsequently, description will be given of the call limitation effected when a predetermined period of time is elapsed in the apparatus employing the call limiting function above, which is a feature of the present invention.

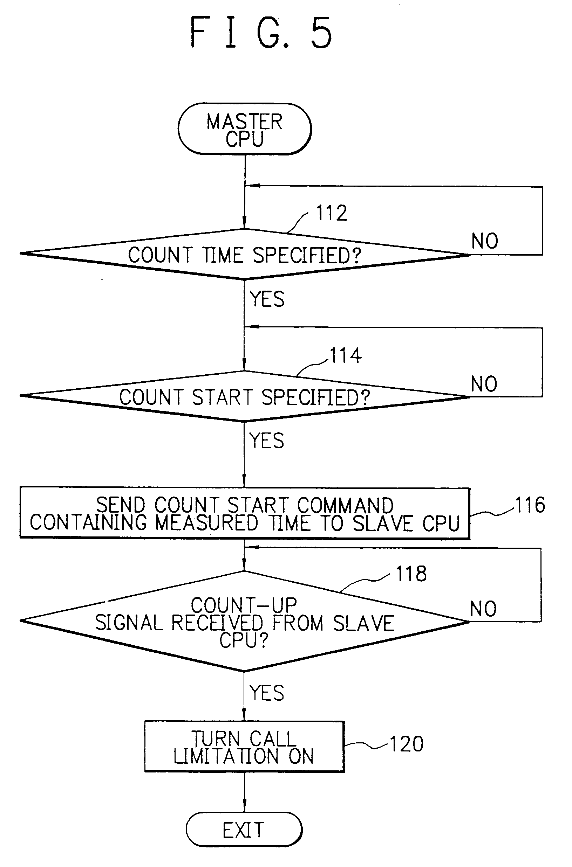

Fig. 5 is a flowchart showing an example of processing executed by the master CPU 16 in accordance with the control procedure stored in the ROM 18 of the embodiment shown in Fig. 2. Fig. 16 is a flowchart showing an example of processing executed by the slave CPU 20 according to the control procedure stored in the ROM 18 of the embodiment.

In a case where it is desired to restrict the call initiation from a rental telephone set when a preset period of time is elapsed after a reference point of time, namely, the rental start time, the operator of the company renting out the telephone set inputs from the key-in section 30 a count time value associated with a period of time (for example, the number of days) for the call limitation. The inputted data is sent via the slave CPU 20 to the master CPU 16 so as to establish a count time specification therein (step 112).

Next, when a count start operation is specified from the input section 30, the specified data is similarly reported via the slave CPU 20 to the master CPU 16, thereby specifying the count initiation (step 114).

On receiving the count time and the count start specification, the master CPU 16 transmits the received data items to the slave CPU 20 (step 116).

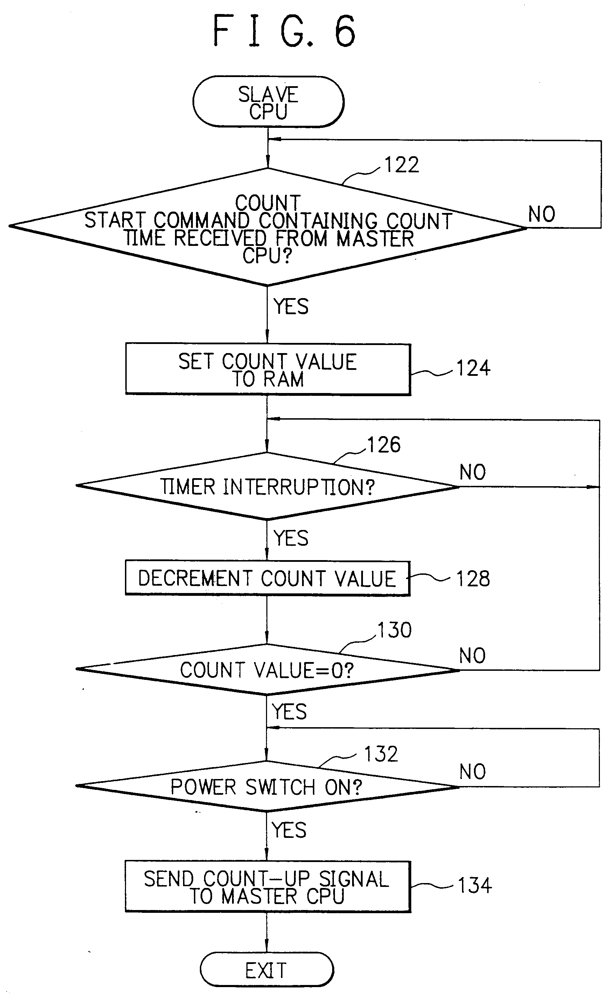

In the flowchart of Fig. 6, on receiving the count time and the count start specification from the master CPU 16 (step 122), the slave CPU 20 sets in the RAM 24 a count value corresponding to the received count time (step 124). Thereafter, each time a timer interruption is received at a fixed period of time from the time interruption generator (step 126), the slave CPU 20 decrements the count value stored in the RAM 24 (step 128).

As a result of the operation above, there are established the time for the call limitation and the initiation of measurement of the time elapsed thereafter. The telephone to be rented out from the company to the user is thus prepared for the call limitation.

As above, since the slave CPU 20, the ROM 22, and the time interruption generator 26 are supplied with power from the power supply for slave block 28 even when the power switch 32 is off, the slave CPU 20 conducts the processing shown in Fig. 6 regardless of the on or off state of the power switch 32.

Resultantly, irrespective of the on or off state of the power switch 32, when the established period of time is elapsed after the telephone is rented out, the count value of the RAM 24 is reset to 0. On detecting the count value set to 0 (step 130), the slave CPU 20 checks the state of the power switch 32 (step 132) to immediately deliver a count-up signal to the master CPU 16 if the power switch 32 is on (step 134).

In the step 132, if the power switch 32 is found to be off, there is effected a wait loop awaiting the on state of the power switch 32 (step 132). When the power switch 32 is turned on, the slave CPU 20 sends a count-up signal to the master CPU 16 thus powered to the operable state (step 134).

Returning to the flowchart of Fig. 5, on receiving the count-up signal from the slave CPU 20, the master CPU 16 sets the call limitation to the on state (step 120). Through the operation above, the call limitation is achieved as described by reference to the flowchart of Fig. 4.

The processing above will now be described by referring to the configuration of Fig. 1. When a call limitation time is specified from the key-in section 30, a count time associated with the specified period time is fed to the time specifying section 34 to be stored therein. The time measuring section 36 continuously achieves the counting operation of time until the period of time specified by the time specifying section 34 is elapsed thereafter. When the time measuring section 36 recognizes the lapse of the specified period of time, the call controller 38 assumes the call limitation to be in the on state and hence terminates the processing without issuing the call.

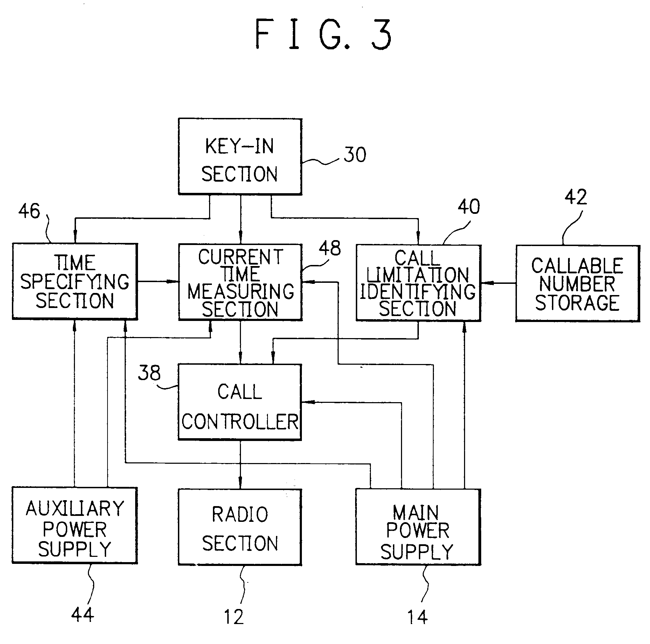

Fig. 3 shows an alternative embodiment of the radio telephone apparatus having a call limiting function in accordance with the present invention. In this apparatus, in place of the time specifying section 34 and the time measuring section 36 of Fig. 1, there are disposed a time specifying section 46 and a current time measuring section 48. A call limitation time supplied from the key input section 30 is stored in the time specifying section 46. The current time measuring section 48 measures the current time and makes a check to determine whether the current time is equal to the point of time loaded in the time specifying section 46. The call controller 38 judges to decide whether or not the call limitation is in the on state depending on a signal from the current time measuring section 48. The other components and operations are substantially identical to those of Fig. 1 and hence description thereof will be avoided. In addition, a specific constitution of this telephone set is almost the same as that of the apparatus shown in Fig. 2.

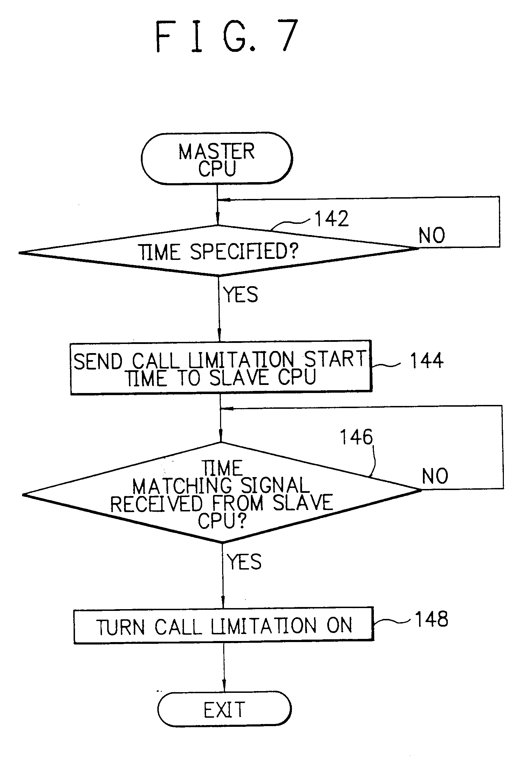

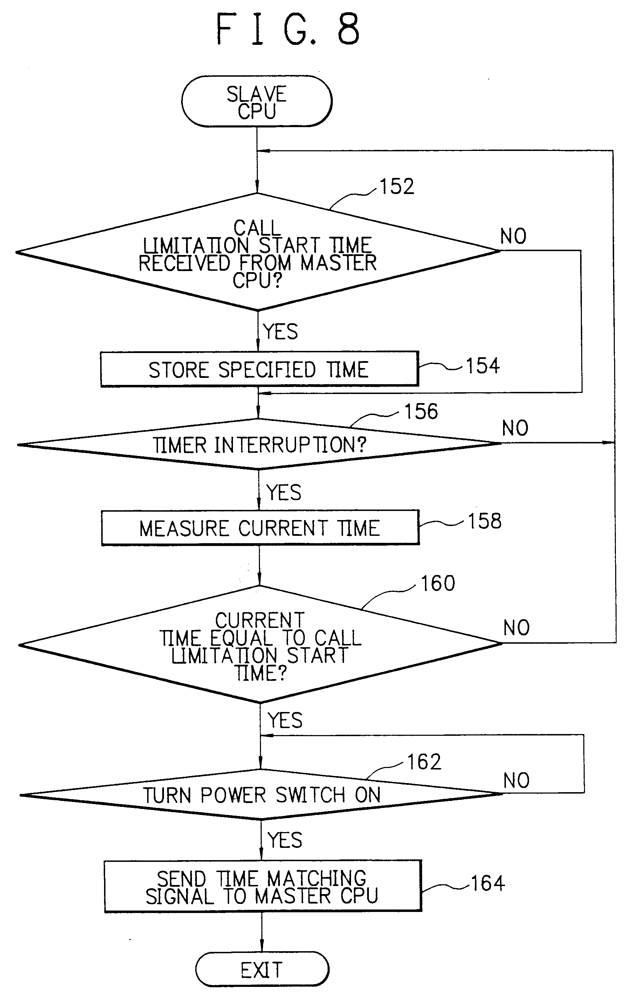

Fig. 7 is a flowchart showing an example of processing accomplished by the master CPU 16 in accordance with the control procedure stored in the ROM 18, whereas Fig. 8 is a flowchart showing an example of processing carried out by the slave CPU 20 based on the control procedure stored in the ROM 22.

To restrict the call origination from a rental telephone at a contracted usage termination (call limitation start) time, the operator of the company renting out the telephone inputs the call limitation start time (for example, information of date as "month, day, hour") from the input section 30. The supplied data is once notified via the slave CPU 20 to the master CPU 16. On receiving the data, the master CPU 16 recognizes the specification of the call limiting time (step 142) and then transmits again the data of call limiting time to the slave CPU 20 (step 144).

In Fig. 8, on receiving the call limitation start time sent from the master CPU 16 (step 152), the slave CPU 20 stores the received data in the RAM 24 (step 154).

As a result of the operation above, the time for the call limitation is established in the rental telephone. Namely, the telephone is rented out in this state to the user at the contracted start time of the telephone.

In this regard, the slave CPU 20 continuously executes the processing of Fig. 8 irrespective of the on or off state of the power switch 32. Each time a timer interruption is received at a fixed interval of time from the time interruption generator 26, the slave CPU 20 increments the count of the current time in the RAM 24, thereby measuring the current time (steps 156 and 158).

After the telephone apparatus is rented out, when the call limitation start time thus established arrives and hence becomes to be equal to the current time, the slave CPU 20 detects the matching of time (step 160) to check the state of the power switch 32. If the switch 32 is on, the slave CPU 20 immediately transmits a time coincidence or matching signal to the master CPU 16 (step 164); otherwise, there is set a wait loop for awaiting the on state of the power switch 32 (step 162). When the power switch is turned on, the time matching signal is sent to the master CPU 16 (step 164).

Returning to the flowchart of Fig. 7, on receiving the time coincidence signal from the slave CPU 20 (step 146), the master CPU 16 sets the call limitation to the on state (step 148). Through the operation above, the call initiation is restricted as described in conjunction with the flowchart of Fig. 4.

Description will now be given of the processing above by reference to the configuration of Fig. 3. When a call limitation time is supplied from the key-in section 30, the specified time is sent to the time specifying section 46 to be stored therein. The current time measuring section 48 continuously measures time until the time stored in the time specifying section 46 arrives. When the section 48 recognizes the arrival of the specified time, the call controller assumes the call limitation to be in the on state and hence terminates the processing without achieving the call origination.

As above, in the radio telephone set in accordance with the present invention, there are disposed means for measuring the period of elapsed time or means for measuring the current time. Consequently, also in the off state of the main power supply, which often occurs in the operation of the telephone apparatus, the lapse of time or the current time is continuously measured by the means above, thereby restricting the call initiation when the preset period of time is elapsed or when the predetermined point of time arrives. This leads to an advantageous effect that the call origination can be limited on the basis of the rental period in the service activities of the companies renting out radio telephone sets as well as in the handing of rental telephone sets on the personal basis.

While the present invention has been described with reference to the particular illustrative embodiments, it is not to be restricted by those embodiment's but only by the appended claims. It is to be appreciated that those skilled in the art can change or modify the embodiments without departing from the scope of the present invention.

## Claims

1. A radio telephone apparatus having a call-limiting function, the apparatus comprising a main power supply (14), a master processor (16), RAM (24) and a timer (26), characterised by further comprising a slave processor (20) with an auxiliary power supply (28) independent of said main power supply for supplying power to the slave processor, RAM and timer, and means (30) for keying a start command containing a count, the slave processor being arranged to set the keyed-in count into the RAM (24), to decrement the contents of the RAM (24) on each interrupt generated by the timer, and to send a call limitation signal to the master processor when the contents of the RAM reach zero and power is supplied to the master processor, wherein the RAM is arranged to contain a list of callable numbers, and on receipt of the call limitation signal the master processor allows call initiation only to a callable number.

## Patentansprüche

1. Funktelefonapparat mit einer anrufbegrenzenden Funktion, welcher Apparat eine Hauptstromversorgung (14), einen Masterprozessor (16), einen RAM (24) und einen Zeitgeber (26) aufweist, dadurch gekennzeichnet, daß er weiter einen untergeordneten Prozessor (20) mit einer Hilfsstromversorgung (28), die unabhängig von der Hauptstromversorgung ist, zum Liefern von Strom zum untergeordneten Prozessor, RAM und Zeitgeber, und Mittel (30) zum Eingeben eines Startbefehls aufweist, der eine Zählung enthält, wobei der untergeordnete Prozessor so angeordnet ist, daß er die eingegebene Zählung in den RAM (24) einbringt, daß er den Inhalt des RAM (24) bei jeder Unterbrechung(Interrupt), die durch den Zeitgeber erzeugt wird, erniedrigt, und daß er ein Anrufbegrenzungssignal zum Masterprozessor sendet, wenn der Inhalt des RAM null erreicht und dem Masterprozessor Strom zugeführt wird, wobei der RAM so ausgebildet ist, daß er eine Liste von anrufbaren Nummern enthält, und daß bei Empfang des Anrufbegrenzungssignals der Masterprozessor die Einleitung eines Anrufes nur zu einer anrufbaren Nummer erlaubt.

## Revendications

1. Appareil de radio-téléphonie comportant une fonction de limitation d' appels, l'appareil comprenant une alimentation de puissance principale (14), un processeur pilote (16), une mémoire RAM ou mémoire à accès sélectif ou aléatoire (24) et un temporisateur ou registre d'horloge (26), caractérisé par le fait de comprendre de plus un processeur asservi (20) avec une alimentation de puissance auxiliaire (28) indépendante de ladite alimentation de puissance principale pour fournir la puissance au processeur asservi, à la mémoire RAM et au temporisateur, et des moyens (30) pour enregistrer manuellement ou au clavier une instruction de départ contenant un nombre, le processeur asservi étant apte à mettre le comptage enregistré manuellement dans la mémoire RAM (24), à décrémenter le contenu de la mémoire RAM (24) lors de chaque interruption générée par le temporisateur ou registre d'horloge et à émettre un signal de limitation d'appels à destination du processeur pilote lorsque le contenu de la mémoire RAM atteint zéro et que la puissance est fournie au processeur pilote, la mémoire RAM étant prévue pour contenir une liste de numéros pouvant être appelés et à la réception du signal de limitation des appels, le processeur pilote n'autorise le lancement d'un appel qu'à destination d' un numéro pouvant être appelé.
